Europäisches Patentamt

European Patent Office

Office européen des brevets

(11) Publication number: **0 163 970**
**B1**

(12) **EUROPEAN PATENT SPECIFICATION**

(45) Date of publication of patent specification: **01.08.90**

(21) Application number: **85105581.4**

(22) Date of filing: **07.05.85**

(51) Int. Cl.⁵: **C 08 F 8/20**, C 08 F 8/38, C 09 D 133/14

(54) Chlorinated or chlorosulfonated ethylene/vinyl acetate copolymer for use in paints.

(30) Priority: **10.05.84 US 608861**
**08.04.85 US 719711**

(43) Date of publication of application:
**11.12.85 Bulletin 85/50**

(45) Publication of the grant of the patent:
**01.08.90 Bulletin 90/31**

(84) Designated Contracting States:
**DE FR GB IT NL**

(56) References cited:
FR-A-1 464 347
GB-A- 986 995
US-A-4 108 612

The file contains technical information
submitted after the application was filed and
not included in this specification

(73) Proprietor: **E.I. DU PONT DE NEMOURS AND COMPANY**
**1007 Market Street**
**Wilmington Delaware 19898 (US)**

(72) Inventor: **Dawes, James Wilkinson**
**4 Cumberland Place**
**London NW1 (GB)**
Inventor: **Smith, John Frederick**
**107 Hackney Circle**
**Wilmington Delaware 19803 (US)**

(74) Representative: **von Kreisler, Alek, Dipl.-Chem. et al**
**Deichmannhaus am Hauptbahnhof**
**D-5000 Köln 1 (DE)**

Courier Press, Leamington Spa, England.

**Description**

The present invention is directed to a novel chlorinated or chlorosulfonated ethylene/vinyl acetate copolymer for use in sprayable corrosion-resistant paint compositions having a high solids content and a low viscosity, to a process for making the copolymers and to the paint compositions derived from these copolymers.

Kokai JP-55-145769 and Kokai JP-55-145775 disclose polymers that are chlorosulfonated ethylene/vinyl acetates. However, these references do not describe the effects of solids content or molecular weight on film characteristics and sprayability.

Various polymers, such as chlorinated polyethylene rubber or chlorosulfonated polyethylene rubber, have been dissolved in solvents and mixed with conventional fillers and pigments to make sprayable corrosion-resistant paints. The sprayable corrosion-resistant paint compositions must have a viscosity low enough to be readily sprayable. It is also desirable to minimize the quantity of solvent for the polymer used in the paint composition. The paint compositions must contain sufficient solids to provide adequate covering characteristics and, perhaps, even more importantly, the paint when applied as a film to a substrate must be strong and capable of withstanding impact without cracking. Thus, the paint compositions must have adequate strength. Paint compositions containing high molecular weight polymers are known to provide better covering characteristics and have higher strength than paint compositions containing lower molecular weight polymers. However, such compositions are more difficult to spray on a substrate because their high molecular weights lead to higher solution viscosities. The paint compositions of the present invention contain a copolymer that results in sprayable paint compositions having a high solids content while, at the same time, they have a surprisingly low viscosity and, the paint compositions, when applied as a film to a substrate, exhibit excellent tensile strength which is an indication of the strength of the paint.

Summary of the invention

The present invention is directed to a copolymer for use in corrosion-resistant paints which comprises a chlorinated or chlorosulfonated ethylene/vinyl acetate copolymer made from an ethylene/vinyl acetate copolymer resin having a melt index of from about 350—10,000 and having a vinyl acetate content of from about 10—30 weight percent, said chlorinated or chlorosulfonated ethylene/vinyl acetate copolymer having a glass transition temperature of from about 15—50°C, a combined chlorine content of from about 42—56 weight percent, about 2—6 acetate groups per 100 backbone carbon atoms of the chlorinated or chlorosulfonated ethylene/vinyl acetate copolymer and, optionally, up to 5 sulfonyl chloride groups per 100 backbone carbon atoms of chlorinated or chlorosulfonated ethylene/vinyl acetate copolymer, and sufficient chlorine atoms attached directly to the copolymer backbone carbon atoms to bring the total degree of substitution of the backbone carbon atoms of the chlorinated or chlorosulfonated ethylene/vinyl acetate copolymer to about 30—50%.

The chlorinated ethylene/vinyl acetate copolymers are made by a process which comprises dissolving an ethylene/vinyl acetate copolymer resin having a vinyl acetate content of about 10—30 weight percent and a melt index of from about 350—10,000 in an organic solvent for the copolymer resin, adding a chlorinating agent and/or a chlorosulfonating agent to the resulting solution to produce a chlorinated or chlorosulfonated ethylene vinyl acetate copolymer wherein the total degree of substitution of backbone carbon atoms of the chlorinated or chlorosulfonated ethylene/vinyl acetate copolymer is about 30—50% and, optionally, contains up to about 5 sulfonyl chloride groups per 100 backbone carbon atoms of the copolymer.

The chlorinated copolymer is especially useful for the preparation of sprayable paint compositions of high solids content and low viscosity. Such compositions comprise about 15—30% by weight, based on the weight of the total composition, of a chlorinated or chlorosulfonated ethylene/vinyl acetate copolymer wherein said copolymer contains from about 42—56 weight percent combined chlorine, from about 2—6 acetate groups per 100 backbone carbon atoms of said chlorinated or chlorosulfonated ethylene/vinyl acetate copolymer, and up to 5 sulfonyl chloride groups per 100 backbone carbon atoms of said chlorinated or chlorosulfonated ethylene/vinyl acetate copolymer so that the total degree of substitution of the backbone carbon atoms of the chlorinated or chlorosulfonated ethylene/vinyl acetate copolymer is from about 30—50 percent, an organic solvent for the chlorinated or chlorosulfonated ethylene/vinyl acetate copolymer, and from about 20—35% by weight fillers and pigments, based on the weight of the total composition, said sprayable paint composition having a solution viscosity of about 0,3—5,0 Pas (300—5,000 cps) measured on a Brookfield viscometer.

Detailed description of the invention

The ethylene/vinyl acetate copolymer resin that is chlorinated or chlorosulfonated contains about 10—30 percent by weight, preferably about 16—26 percent by weight, copolymerized vinyl acetate and has a melt index of from 350—10,000, preferably about 400—3000. The melt index is determined by ASTM D1234-65T, revised 1965 (Condition E). The melt index of the ethylene/vinyl acetate copolymer resin that is chlorinated or chlorosulfonated must be between 350—10,000. If the melt index of the copolymer resin is less than 350, the chlorinated or chlorosulfonated copolymer will have too high a viscosity and when such copolymer is compounded in a paint composition, the resulting viscosity of the paint composition is, likewise, too high. If the ethylene/vinyl acetate copolymer resin has a melt index greater than 10,000, the chlorinated or chlorosulfonated copolymer elastomer is unduly soft and processing is difficult.

The ethylene/vinyl acetate copolymer resin is dissolved in an organic solvent, such as a halogenated hydrocarbon, for example, chloroform, methylene chloride, tetrachloroethylene, chlorobenzene or, preferably, carbon tetrachloride. The ethylene/vinyl acetate copolymer resin is reacted with the chlorinating agent, gaseous chlorine alone or with the chlorosulfonating agent, sulfuryl chloride to introduce on the ethylene/vinyl acetate copolymer resin, chlorine alone or with sulfur, wherein the sulfur is present on the chlorinated copolymer as sulfonyl chloride groups. The amount of gaseous chlorine and sulfuryl chloride used in the process is determined by the required degree of chlorination or the amount of sulfur desired as sulfonyl chloride groups on the chlorinated copolymer. Generally between about 0.5—2 parts by weight gaseous chlorine and 0—0.1 parts by weight sulfuryl chloride per part ethylene/vinyl acetate copolymer resin are used to incorporate the desired amounts of chlorine atoms and sulfonyl chloride groups on the copolymer.

The temperature at which the chlorination or chlorosulfonation reaction is carried out may be varied over a wide range and is generally governed by the viscosity of the solution and the decomposition temperature of the conventional free radical catalyst used in the process. Usually the temperature is between about 80—100°C. Generally the chlorination or chlorosulfonation is conducted in the presence of conventional free radical initiators such as 2,2'-azobis[2-methylpropane nitrile]. The resulting chlorinated or chlorosulfonated ethylene/vinyl acetate copolymer can be isolated by known means, preferably, drum drying. Other well known methods of isolation that can be used are, for example, precipitation, filtration and spray drying or solvent exchange to a nonchlorinated solvent.

The resulting chlorinated or chlorosulfonated ethylene/vinyl acetate copolymer has a glass transition temperature of from about 15—50°C and a combined chlorine content of from about 42—56, preferably 44—50, weight percent. The copolymer contains from about 2—6, usually 2.5—5.5, acetate groups per 100 backbone carbon atoms of the copolymer. Optionally, the copolymer contains up to 5, usually 0.1—1, sulfonyl chloride groups per 100 backbone carbon atoms of the copolymer. The copolymer contains sufficient chlorine atoms attached directly to the copolymer backbone carbon atoms to bring the total degree of substitution of backbone carbon atoms of the copolymer to about 30—50%.

The degree of substitution of the substituents on the chlorinated or chlorosulfonated copolymer is critical, because of their effect on the glass transition temperature (Tg) of the copolymer. If the glass temperature is below about 15°C, which occurs when the total degree of substitution is below about 30 percent, paint compositions containing the copolymers and conventional fillers and pigments, when applied as a film to a substrate are too soft and tacky and lack adequate tensile strength to form a strong film on a substrate. On the other hand, if the total degree of substitution of the backbone carbon atoms on the chlorinated or chlorosulfonated ethylene/vinyl acetate copolymer is more than about 50 percent, the glass transition is above about 50°C. Paint compositions containing such copolymers when applied as a film to a substrate are too brittle and crack upon impact.

If the amount of acetate groups on the copolymer is less than about 2 per 100 backbone carbon atoms or more than about 6 per 100 backbone carbon atoms of the chlorinated or chlorosulfonated ethylene/vinyl acetate copolymer, paint compositions containing the copolymer when applied as a film to a substrate are not strong and lack adequate tensile strength, even at the required degree of overall substitution. It is surprising that a chlorinated or chlorosulfonated ethylene/vinyl acetate copolymer, made from an ethylene/vinyl acetate resin that has such a low molecular weight, as indicated by the melt index of the resin of from 300—10,000, would result in a chlorinated or chlorosulfonated ethylene/vinyl acetate copolymer that when used as a component in corrosion-resistant paint compositions would result in a film that is especially strong, as indicated by its tensile strength, and because of the low molecular weight of the chlorinated or chlorosulfonated copolymer it can be readily applied to a substrate by spraying.

The above-described chlorinated or chlorosulfonated ethylene/vinyl acetate copolymer can be formulated into corrosion-resistant paint compositions by any conventional means with pigments and fillers on, for example, a ball mill. The pigments used can be any of the conventional types used in paint compositions comprising, for example, iron oxides, lead oxides, strontium chromate, carbon black, coal dust, titanium dioxide, talc, barium sulfate, as well as color pigments, including cadmium yellow, cadmium red, chromium yellow, and metallic pigments such as aluminum flake.

Conventional fillers used in corrosion-resistant paints can be incorporated in the composition. Representative fillers include calcium carbonate, clay, talc, etc.

The corrosion-resistant paint composition of the present invention contains about 15—30 percent by weight, usually 12—26 percent by weight, based on the total weight of the composition of the chlorinated or chlorosulfonated ethylene/vinyl acetate copolymer and a solvent for the chlorinated copolymer. The solvent evaporates after the paint composition is applied to a substrate leaving the solid material to form a film or coating. The solvent is chosen so as to provide good viscosity and sprayability characteristics. The solvent also assists in the substrate wetting, promotes copolymer component compatibility, package stability and coalescence or film formation.

Representative solvents that can be used include aromatic hydrocarbons such as toluene and xylene, halogenated aliphatic compounds such as carbon tetrachloride, chlorobenzene, chloroform and methylene

3

chloride, ketones such as methyl ethyl ketone and methyl isobutyl ketone, alcohols such as isopropyl alcohol, normal butyl alcohol, monoethers of glycols such as the monoethers of ethylene glycol and diethylene glycol, as well as mixtures of the above. The solvent is present in the composition in amounts of about 30—60 percent by weight based on the total weight of the solvent and the chlorinated or chlorosulfonated ethylene/vinyl acetate copolymer component and the pigments and fillers present. The composition contains a relatively large amount of solids which provides good covering characteristics. The particular amount of solvent used is that amount which will result in a paint composition having a solution viscosity determined in 30 percent by weight xylene of about 0,3—5,0 Pas (300—5000 cps), usually, 0,4—1,0 Pas (400—1000 cps), measured on a Brookfield viscometer. Generally, the utilization of the chlorinated or chlorosulfonated ethylene/vinyl acetate copolymer allows the addition of about 20—35 percent by weight fillers and pigments to give a total solids content of from 35—65 percent by weight.

In addition, plasticizers, antioxidants, U.V. light absorbers, flow control agents and other formulating additives can be used in the sprayable paint composition if desired. These materials are optionally present in amounts up to 5 percent by weight based on the total solids in the corrosion-resistant paint composition.

The corrosion-resistant paint composition of the present invention is designed for application by spraying, although other conventional methods of coating, including brushing, dipping, and flow coating, can be employed if desired. However, the paint composition is especially formulated for spraying. Conventional spray techniques and equipment are utilized in the application of the corrosion-resistant paint composition. The paint composition can be applied over any substrate including wood, metal, glass, cloth, plastics, and the like, as well as over various primers. The paint compositions are particularly useful on substrates such as primed steel, aluminum, insulation material and the like.

In general, coating thickness of the paint composition on the substrate will vary depending upon the particular application desired. In general, coatings from 0.1—2 mm have been found to be satisfactory in most applications.

After application of the corrosion-resistant paint compositions to a substrate, the compositions can be cured. The compositions are not usually subjected to a heat cure cycle but, if desired, improvements in the properties are obtained when the compositions are cured at temperatures of about 40°—120°C, for 5—60 minutes and, in most cases, from 60°—120°C for about 10—30 minutes. Higher or lower temperatures with correspondingly shorter or longer times can be utilized. The exact cure schedule best employed depends upon the nature of the substrate.

The corrosion-resistant paint composition has a high solids content and yet the viscosity of the composition is low enough that it can be applied to a substrate by conventional paint spraying techniques.

The following examples illustrate preferred embodiments of the invention in which amounts are given in parts by weight, unless otherwise indicated.

## Example 1

Into a 38 liter stirred autoclave were charged 1.4 kg ethylene/vinyl acetate copolymer resin (EVA) having a melt index of 400 and a vinyl acetate content of 25 weight percent, and 18.2 kg carbon tetrachloride. The autoclave was closed and the pressure set at 0.17 MPa. The reaction mixture was heated at 100°C until the resin was dissolved, then the addition of 20 ml/min initiator solution (0.5 percent 2,2'-azobis-[2-methylpropane nitrile] in chloroform) was instituted. Chlorine gas was added to the reaction mixture at a rate of 0.45 kg/hr, and simultaneously 1 liter (0.6 kg or 0.43 parts by weight per part copolymer resin) of sulfuryl chloride was added over a period of 30 minutes. Addition of chlorine was continued until a total of 1 kg, i.e., 0.71 parts by weight per part copolymer resin, was added (2.2 hr). Following a degassing step to remove acid gas, enough stabilizer solution (Epon® 828 in carbon tetrachloride) was added to the autoclave to supply 23.5 g Epon® 828 (condensation product of bisphenol A and epichlorohydrin with a neutralization equivalent of 180). The autoclave was cooled and discharged. The reaction mixture was filtered and the chlorosulfonated ethylene/vinyl acetate copolymer was isolated by drum drying. Analysis showed that the polymer contained 42.2 weight percent combined chlorine and 1.01 weight percent sulfur. Substitution of the polymer backbone with chlorine, acetate and sulfonyl chloride moieties was 40.13 percent comprising 4.90 acetate groups per hundred backbone carbon atoms, 0.93 sulfonyl chloride groups per hundred backbone carbon atoms and 34.3 chlorine atoms per hundred backbone carbon atoms of the chlorosulfonated ethylene vinyl/acetate copolymer. The glass transition temperature (Tg) was 43°C.

## Example 2

A chlorinated ethylene/vinyl acetate copolymer was prepared by the method described above in Example 1, except that 2.05 kg i.e. 1.46 parts by weight per part copolymer resin, gaseous chlorine was added to the reaction mixture over a period of 4.5 hr and no sulfuryl chloride was used. Analysis of the chlorinated ethylene/vinyl acetate copolymer showed the polymer contained 47 weight percent combined chlorine. Polymer backbone substitution totalled 46.05 percent comprising 4.90 acetate groups per hundred backbone carbon atoms and 41.15 chlorine atoms per hundred backbone carbon atoms of the chlorinated ethylene/vinyl acetate copolymer.

### Example 3

A 3.8 liter stirred autoclave was charged with 0.34 kg ethylene/vinyl acetate copolymer resin having a melt index of 1000 and a vinyl acetate content 26 weight percent, 2.59 kg carbon tetrachloride, and 0.27 kg chloroform. The autoclave was closed and the pressure was set at 0.38 MPa. The reaction mixture was heated at 105°C until the resin dissolved. Then 4 ml of an initiator solution (0.5 percent 2,2'-azobis-[2-methylpropane nitrile] in chloroform) was added and the reaction mixture was allowed to cool to 90°C while continuously adding gaseous chlorine at a rate of 0.72 g/min and initiator at a rate of 0.27 ml/min. Addition of sulfuryl chloride was begun and 420 ml was added over a period of 210 min to give 0.73 parts by weight per part copolymer resin. Total addition time for the chlorine and initiator was 250 min resulting in addition of .85 parts by weight chlorine per part copolymer resin. Following a degassing step to remove acid gas, enough stabilizer solution (Epon® 828 in carbon tetrachloride) was added to supply 9 g Epon® 828. The reactor was cooled and discharged and the product was isolated by drum drying. Analysis showed the polymer contained 43.1 weight percent combined chlorine and 0.91 weight percent sulfur. The total degree of backbone substitution with chlorine, acetate and sulfonyl chloride moieties was 41.85 percent comprising 5.14 acetate groups per hundred backbone carbon atoms, 0.91 sulfonyl chloride groups per hundred backbone carbon atoms and 35.86 chlorine atoms per hundred backbone carbon atoms. Glass transition temperature was 28°C.

### Example 4

A chlorinated ethylene/vinyl acetate copolymer was prepared according to the procedure described in Example 2, except 2.7 kg ethylene/vinyl acetate resin having a melt index of 2500 and a vinyl acetate content of 18 weight percent was used and 5.3 kg chlorine (i.e. 1.97 parts by weight chlorine per part copolymer resin) was added over a period of 7.75 hr and rate of initiator addition was 4 ml/min. The product contained 47.8 percent combined chlorine. Substitution of the polymer backbone totalled 43.52 percent comprising 3.34 acetate groups per hundred backbone carbon atoms and 40.18 chlorine atoms per hundred backbone carbon atoms. The glass transition temperature of the product was 36°C.

### Comparative Example A

Into a 3.8 liter stirred autoclave were charged 0.2 kg high density polyethylene (Melt Index 466), 2.07 carbon tetrachloride, 0.23 chloroform and 20 ml of a 1 percent solution of pyridine in carbon tetrachloride. The autoclave was closed and the pressure set at 0.27 MPa. The reaction mixture was heated at 105°C until the resin dissolved, then 8 ml of an initiator solution (0.5 percent, 2,2'-azobis-[2-methylpropane nitrile] in chloroform) was added. Simultaneously chlorine gas and sulfuryl chloride were introduced to the reaction mixture. A total of 189 ml sulfuryl chloride was added over a period of 1.5 hr and the chlorine gas was added at a rate of 1.1 g/min until a total of 0.165 kg had been added. At this point enough stabilizer solution (Epon® 828 in carbon tetrachloride) was added to supply 3.5 g Epon® 828 (a condensation product of bisphenol A and epichlorohydrin). The reactor was cooled and discharged. The reaction mixture was filtered and the chlorosulfonated polyethylene product was washed twice with a 40 percent aqueous methanol solution, followed by a water wash. Isolation was done on a drum drier. Analysis showed the polymer contained 42.2 weight percent chlorine and 1.98 weight percent sulfur. The overall degree of polymer backbone substitution with chlorine and sulfonyl chloride moieties was 30.32 percent comprising 1.57 sulfonyl chloride groups per hundred backbone carbon atoms and 28.75 chlorine atoms per hundred backbone carbon atoms. The glass transition temperature of the polymer was 10°C.

### Comparative Example B

The process described in Example 1 was repeated except that the ethylene/vinyl acetate copolymer resin had a melt index of 150 and a vinyl acetate content of 18 weight percent and a total of 0.55 kg gaseous chlorine was added over a period of 1.5 hr to the reaction mixture. The chlorosulfonated ethylene/vinyl acetate copolymer had a combined chlorine content of 35.2 weight percent and a sulfur content of 1.24 weight percent. The overall total degree of polymer backbone substitution with chlorine, acetate and sulfonyl chloride moieties was 28.36 percent comprising 3.34 acetate groups per hundred backbone carbon atoms, 0.97 sulfonyl chloride groups per hundred backbone carbon atoms and 24.05 chlorine atoms per hundred backbone carbon atoms. The glass transition temperature was 5°C.

Properties of the polymers of Examples 1—4 and Comparative Examples A—B are shown in Table I.

# EP 0 163 970 B1

TABLE I

| Sample | Example 1 | Example 2 | Example 3 | Example 4 | Comparative Ex. A | Comparative Ex. B |
|---|---|---|---|---|---|---|
| Starting resin | EVA | EVA | EVA | EVA | Polyethylene | EVA |
| Melt index | 400 | 400 | 1000 | 2500 | 466 | 150 |
| Weight % vinyl acetate starting resin | 25 | 25 | 26 | 18 | 0 | 18 |
| Product | Chloro-sulfo-nated EVA | Chlori-nated EVA | Chloro-sulfo-nated EVA | Chlori-nated EVA | Chlorosulfo-nated poly-ethylene | Chloro-sulfo-nated EVA |
| Weight % chlorine combined product | 42.2 | 47 | 43.1 | 47.8 | 42.2 | 35.2 |
| % Backbone carbon atoms substituted with Cl | 34.3 | 41.15 | 35.86 | 40.18 | 28.75 | 24.05 |
| Weight % sulfur product | 1.01 | 0 | 0.91 | 0 | 1.98 | 1.24 |
| % Backbone carbon atoms substituted with $-SO_2Cl$ | 0.93 | 0 | 0.91 | 0 | 1.57 | 0.97 |
| % Backbone carbon atoms substituted with $-OCOCH_3$ | 4.90 | 4.90 | 5.14 | 3.34 | 0 | 3.34 |
| Degree of substitution** | 40.13 | 46.05 | 41.85 | 43.52 | 30.32 | 28.36 |
| Solution viscosity (cps) 33% in toluene Pas | (250) 0.25 | (480) 0.48 | (220*) 0.22 | (137*) 0.14 | (750) 0.75 | (715) 0.72 |
| Tg (°C) | 43 | — | 28 | 36 | 10 | 5 |

\* In xylene.
** Percentage of polymers backbone substituted with chlorine atoms, acetate groups and optionally sulfonyl chloride groups.

The chlorosulfonated and chlorinated ethylene/vinyl acetate copolymers prepared from the polymers of Examples 1—4, and Comparative Examples A and B were formulated into corrosion-resistant paints by ballmilling the formulations shown in Table II. Amounts given are in parts by weight.

6

TABLE II

| Sample | Ex. 1 | Ex. 2 | Ex. 3 | Ex. 4 | Comp. Ex. A | Comp. Ex. B |
|---|---|---|---|---|---|---|
| Polymer | 200 | 75 | 100 | 100 | 100 | 300 |
| $TiO_2$ | 80 | 30 | 40 | 40 | 40 | 120 |
| $CaCO_3$ | 160 | 60 | 50 | 50 | 80 | 240 |
| PbO | 40 | 15 | 20 | — | 20 | 60 |
| MgO | | | | 10 | | |
| Mercaptobenzthiazole disulfide | 1 | 0.7 | — | — | 1 | 3 |
| Staybelite® resin (hydrogenated resin) | — | — | — | — | 3 | 9 |
| Tenlo® 70-(polyethylene glycol ester and fatty amides dispersing agent | 1 | — | — | — | — | — |
| Nuosperse® (dispersing agent) | | | | 1 | | |
| Tetramethyl thiuram disulfide | 3 | — | — | — | — | — |
| Toluene | 500 | 180 | — | — | 287 | 550 |
| Xylene | — | — | 250 | 250 | — | — |

The corrosion-resistant paints described in Table II were cast onto a Teflon® fluorocarbon film and dried. The polymer films were tested for tensile strength after the polymer paint compositions were cured at 100°C for 20 minutes according to ASTM D412. The viscosity and percent solids of the paints and tensile strength of films are shown in Table III.

TABLE III

| Paint properties | Ex. 1 | Ex. 2 | Ex. 3 | Ex. 4 | Comp. A | Comp. B |
|---|---|---|---|---|---|---|
| Viscosity (cps) | (380) | (900) | (420) | (255) | (1175) | (3650) |
| Pas | 0.38 | 0.90 | 0.42 | 0.26 | 1.18 | 3.65 |
| Weight percent solids | 49.2 | 50.1 | 45.6 | 44.6 | 46 | 57.1 |
| Film properties | | | | | | |
| $T_B$ (MPa) | 13.8 | 17.1 | 12.4 | 13.6 | 2.1 | 4.6 |

The test results indicate that the paint compositions made according to the present invention have a low viscosity in spite of the fact that the solids content is high. In addition, the tensile strength is high indicating that the film is strong and will not break.

Comparative Example A indicates that a chlorosulfonated polyethylene made from polyethylene having a melt index of 466 exhibits poor film strength, as shown by its $T_B$ of 2.1 MPa.

Comparative Example B indicates that a chlorosulfonated ethylene/vinyl acetate copolymer made from an ethylene/vinyl acetate copolymer resin having a melt index of 150 and chlorinated to a degree of substitution of only 28.36 percent results in a polymer film having inadequate strength, as indicated by its tensile strength value.

**Claims**

1. A copolymer for use in corrosion-resistant paints which comprises a chlorinated or chlorosulfonated ethylene/vinyl acetate copolymer made from an ethylene/vinyl acetate copolymer resin having a melt index of about 350—10,000 and having a vinyl acetate content of from about 10—30 weight percent, said chlorinated or chlorosulfonated ethylene/vinyl acetate copolymer having a glass transition temperature of from about 15—50°C, a combined chlorine content of from about 42—56 weight percent, about 2—6 acetate groups per 100 backbone carbon atoms of the chlorinated or chlorosulfonated ethylene/vinyl acetate copolymer and, optionally, up to about 5 sulfonyl chloride groups per 100 backbone carbon atoms of the chlorinated or chlorosulfonated ethylene/vinyl acetate copolymer, and sufficient chlorine atoms attached directly to the copolymer backbone carbon atoms to bring the total degree of substitution of the backbone carbon atoms of the chlorinated or chlorosulfonated ethylene/vinyl acetate copolymer to about 30—50%.

2. A copolymer of Claim 1 wherein the chlorinated or chlorosulfonated ethylene/vinyl acetate copolymer contains from about 2.5—5.5 acetate groups per 100 backbone carbon atoms of the ethylene/vinyl acetate copolymer.

3. A copolymer of Claim 1 wherein the chlorosulfonated ethylene/vinyl acetate copolymer contains from about 0.1—1 sulfonyl chloride groups per 100 backbone carbon atoms of the chlorosulfonated ethylene/vinyl acetate copolymer.

4. A copolymer of Claims 1 or 2 wherein the chlorinated or chlorosulfonated ethylene/vinyl acetate copolymer is made from an ethylene/vinyl acetate copolymer resin having a melt index from about 400—3,000.

5. A copolymer of Claim 3 wherein the chlorosulfonated ethylene/vinyl acetate copolymer has a combined chloride content of from about 44—50 percent by weight and said copolymer is made from an ethylene/vinyl acetate copolymer resin having a melt index of from 400—3,000.

6. A process for making a chlorinated ethylene/vinyl acetate copolymer according to Claim 1 which comprises dissolving an ethylene/vinyl acetate copolymer resin having a vinyl acetate content of about 10—30 weight percent and a melt index of from about 350—10,000 in an organic solvent for the copolymer resin, adding a chlorinating agent and or chlorosulfonating agent to the resulting solution to produce a chlorinated or chlorosulfonated ethylene/vinyl acetate copolymer wherein the total degree of substitution of the backbone carbon atoms of the chlorinated or chlorosulfonated ethylene/vinyl acetate copolymer is about 30—50% and, optionally, contains up to about 5 sulfonyl chloride groups per 100 backbone carbon atoms of the copolymer.

7. A process of Claim 6 wherein the ethylene/vinyl acetate copolymer resin has a vinyl acetate content of from about 16—26 weight percent.

8. A process of Claims 6 or 7 wherein the melt index of the ethylene/vinyl acetate copolymer resin is from about 400—3,000.

9. A sprayable paint composition of high solids content and low viscosity comprising 15—30 percent by weight, based on the weight of the total composition, of a chlorinated or chlorosulfonated ethylene/vinyl acetate copolymer according to claim 1 wherein said copolymer contains about 42—56 weight percent combined chlorine, from about 2—6 acetate groups per 100 backbone carbon atoms of said chlorinated or chlorosulfonated ethylene/vinyl acetate copolymer, up to 5 sulfonyl chloride groups per 100 backbone carbon atoms of said chlorinated or chlorosulfonated ethylene/vinyl acetate so that the total degree of substitution of the backbone carbon atoms of the chlorinated or chlorosulfonated ethylene/vinyl acetate copolymer is from about 30—50%, an organic solvent for the chlorinated or chlorosulfonated ethylene/vinyl acetate copolymer, and from about 20—35 percent by weight fillers and pigments, based on the weight of the total composition, the sprayable paint composition having a solution viscosity of about 300—5,000 cps measured on a Brookfield viscometer.

10. A composition of Claim 9 containing about 12—26 percent by weight of a chlorinated or chlorosulfonated ethylene/vinyl acetate copolymer.

11. A composition of Claim 9 wherein the chlorosulfonated ethylene/vinyl acetate copolymer contains from about 0.1—1 sulfonyl chloride groups per 100 backbone carbon atoms of said copolymer.

12. A composition of Claim 9 wherein the solution viscosity of the sprayable composition is from about 400—1000 cps.

13. A composition of Claim 9 wherein the organic solvent is present in an amount of about 30—60 percent by weight based upon the total weight of the chlorinated or chlorosulfonated ethylene/vinyl acetate copolymer, solvent, fillers and pigments.

14. A composition of Claim 9 having a total solids content of from about 35—65 percent by weight.

**Patentansprüche**

1. Copolymer zur Verwendung in korrosionsbeständigen Anstrichmitteln, umfassend ein chloriertes oder chlorsulfoniertes Ethylen/Vinylacetat-Copolymer, das aus einem Ethylen/Vinylacetat-Copolymer-Harz mit einem Schmelz-Index von etwa 350 bis 10 000 hergestellt ist und einen Vinylacetat-Gehalt von etwa 10 bis 30 Gew.-% hat, wobei das chlorierte oder chlorsulfonierte Ethylen/Vinylacetat-Copolymer eine Glasübergangstemperatur von etwa 15 bis 50°C, einen vereinigten Chlor-Gehalt von etwa 42 bis 56 Gew.-%, etwa 2 bis 6 Acetat-Gruppen auf 100 Gerüst-Kohlenstoff-Atome des chlorierten oder chlorsulfonierten Ethylen/Vinylacetat-Copolymers und gegebenenfalls bis zu etwa 5 Sulfonylchlorid-Gruppen auf 100 Gerüst-Kohlenstoff-Atome des chlorierten oder chlorsulfonierten Ethylen/Vinylacetat-Copolymers besitzt, sowie genügend Chlor-Atome, die unmittelbar an die Gerüst-Kohlenstoff-Atome des Copolymers gebunden sind, um den Gesamt-Substitutionsgrad der Gerüst-Kohlenstoff-Atome des chlorierten oder chlorosulfonierten Ethylene/Vinylacetat-Copolymers auf etwa 30 bis 50% zu bringen.

2. Copolymer nach Anspruch 1, worin das chlorierte oder chlorosulfonierte Ethylen/Vinylacetat-Copolymer etwa 2,5 bis 5,5 Acetat-Gruppen auf 100 Gerüst-Kohlenstoff-Atome des Ethylen/Vinylacetat-Copolymers enthält.

3. Copolymer nach Anspruch 1, worin das chlorosulfonierte Ethlyen/Vinylacetat-Copolymer etwa 0,1 bis 1 Sulfonylchlorid-Gruppen auf 100 Gerüst-Kohlenstoff-Atome des chlorosulfonierten Ethylen/Vinylacetat-Copolymers enthält.

4. Copolymer nach den Ansprüchen 1 oder 2, worin das chlorierte oder chlorosulfonierte Ethylen/Vinylacetat-Copolymer aus einem Ethylen/Vinylacetat-Copolymer-Harz mit einem Schmelz-Index von etwa 400 bis 3 000 hergestellt ist.

5. Copolymer nach Anspruch 3, worin das chlorosulfonierte Ethylen/Vinylacetat-Copolymer einen vereinigten Chlor-Gehalt von etwa 44 bis 50 Gew.-% besitzt und das Copolymer aus einem Ethylen/Vinylacetat-Copolymer-Harz mit einem Schmelz-Index von etwa 400 bis 3 000 hergestellt ist.

6. Verfahren zur Herstellung eines chlorierten Ethylen/Vinylacetat-Copolymers nach Anspruch 3, umfassend das Auflösen eines Ethylen/Vinylacetat-Copolymer-Harzes mit einem Vinylacetat-Gehalt von etwa 10 bis 30 Gew.-% und einem Schmelz-Index von etwa 350 bis 10 000 in einem organischen Lösungsmittel für das Copolymer-Harz, das Zugeben eines Chlorierungsmittels und/oder Chlorosulfonierungsmittels zu der resultierenden Lösung, um ein chloriertes oder chlorosulfoniertes Ethylen/Vinylacetat-Copolymer zu erzeugen, worin der Gesamt-Substitutionsgrad der Gerüst-Kohlenstoff-Atome des chlorierten oder chlorosulfonierten Ethylen/Vinylacetat-Copolymers etwa 30 bis 50% beträgt und das gegebenenfalls und das gegebenenfalls bis zu etwa 5 Sulfonylchlorid-Gruppen auf 100 Gerüst-Kohlenstoff-Atome des Copolymers enthält.

7. Verfahren nach Anspruch 6, worin das Ethylen/Vinylacetat-Copolymer-Harz einen Vinylacetat-Gehalt von etwa 16 bis 26 Gew.-% besitzt.

8. Verfahren nach den Ansprüchen 6 oder 7, worin der Schmelz-Index des Ethylen/Vinylacetat-Copolymers etwa 400 bis 3 000 beträgt.

9. Sprühfähige Anstrichmittel-Zusammensetzung mit hohem Feststoff-Gehalt und niedriger Viskosität, umfassend 15 bis 30 Gew.-%, bezogen auf die gesamte Zusammensetzung, eines chlorierten oder chlorosulfonierten Ethylen/Vinylacetat-Copolymers nach Anspruch 1, worin das Copolymer etwa 42 bis 56 Gew.-% Gesamt-Chlor, etwa 2 bis 6 Acetat-Gruppen auf 100 Gerüst-Kohlenstoff-Atome des chlorierten oder chlorosulfonierten Ethylen/Vinylacetat-Copolymers, bis zu 5 Sulfonylchlorid-Gruppen auf 100 Gerüst-Kohlenstoff-Atome des chlorierten oder chlorosulfonierten Ethylen/Vinylacetat-Copolymers besitzt, so daß der Gesamt-Substitutionsgrad der Gerüst-Kohlenstoff-Atome des chlorierten oder chlorosulfonierten Ethylen/Vinylacetat-Copolymers etwa 30 bis 50% beträgt, ein organisches Lösungsmittel für das chlorierte oder chlorosulfonierte Ethylen/Vinylacetat-Copolymer und etwa 20 bis 35 Gew.-% Füllstoffe und Pigmente, bezogen auf das Gewicht der gesamten Zusammensetzung, wobei die sprühfähige Anstrichmittel-Zusammensetzung eine Viskosität der Lösung von etwa 300 bis 5 000 cP, gemessen mit einem Brookfield-Viskosimeter, hat.

10. Zusammensetzung nach Anspruch 9, enthaltend etwa 12 bis 26 Gew.-% eines chlorierten oder chlorosulfonierten Ethylen/Vinylacetat-Copolymers.

11. Zusammensetzung nach Anspruch 9, worin das chlorosulfonierte Ethylen/Vinylacetat-Copolymer etwa 0,1 bis 1 Sulfonyl-Gruppen auf 100 Gerüst-Kohlenstoff-Atome enthält.

12. Zusammensetzung nach Anspruch 9, worin die Viskosität der Lösung etwa 400 bis 1 000 cP beträgt.

13. Zusammensetzung nach Anspruch 9, worin das organische Lösungsmittel in einer Menge von etwa 30 bis 60 Gew.-%, bezogen auf das Gesamt-Gewicht des chlorierten oder chlorosulfonierten Ethylen/Vinylacetat-Copolymers, Lösungsmittels, der Füllstoffe und Pigmente beträgt.

14. Zusammensetzung nach Anspruch 9 mit einem Gesamt-Feststoff-Gehalt von 35 bis 65 Gew.-%.

**Revendications**

1. Un copolymère à utiliser dans des peintures résistantes à la corrosion, qui comprend un copolymère éthylène/acétate de vinyle chloré ou chlorosulfoné préparé à partir d'une résine de copolymère éthylène/acétate de vinyle ayant un indice de fluidité à l'état fondu d'environ 350 à 10 000 et ayant une teneur en acétate de vinyle d'environ 10 à 30 pour cent en poids, ledit copolymère éthylène/acétate de vinyle chloré ou chlorosulfoné ayant une température de transition vitreuse d'environ 15 à 50°C, une teneur en chlore combiné d'environ 42 à 56 pour cent en poids, environ 2 à 6 groupes acétate pour 100 atomes de carbone de squelette du copolymère éthylène/acétate de vinyle chloré ou chlorosulfoné et, facultativement, jusqu'à environ 5 groupes chlorure de sulfonyle pour 100 atomes de carbone de squelette du copolymère éthylène/acétate de vinyle chloré ou chlorosulfoné, et suffisamment d'atomes de chloré fixés directement aux atomes de carbone de squelette du copolymère pour porter le degré total de substitution des atomes de carbone de squelette du copolymère éthylène/acétate de vinyle chloré ou chlorosulfoné à environ 30 à 50%.

2. Un copolymère de la revendication 1, dans lequel le copolymère éthylène/acétate de vinyle chloré ou chlorosulfoné contient environ 2,5 à 5,5 groupes acétate pour 100 atomes de carbone de squelette du copolymère éthylène/acétate de vinyle.

3. Un copolymère de la revendication 1, dans lequel le copolymère éthylène/acétate de vinyle chlorosulfoné contient environ 0,1 à 1 groupe chlorure de sulfonyle pour 100 atomes de carbone de squelette du copolymère éthylène/acétate de vinyle chlorosulfoné.

4. Un copolymère de la revendication 1 ou 2, dans lequel le copolymère éthylène/acétate de vinyle chloré ou chlorosulfoné est préparé à partir d'une résine de copolymère éthylène/acétate de vinyle ayant un indice de fluidité à l'état fondu d'environ 400 à 3000.

5. Un copolymère de la revendication 3, dans lequel le copolymère éthylène/acétate de vinyle chlorosulfoné a une teneur en chlore combiné d'environ 44 à 50 pour cent en poids et ledit copolymère est préparé à partir d'une résine de copolymère éthylène/acétate de vinyle ayant un indice de fluidité à l'état fondu de 400 à 3000.

6. Un procédé pour préparer un copolymère éthylène/acétate de vinyle chloré selon la revendication 1, qui consiste à dissoudre une résine de copolymère éthylène/acétate de vinyle ayant une teneur en acétate de vinyle d'environ 10 à 30 pour cent en poids et un indice de fluidité à l'état fondu d'environ 350 à 10 000 dans un solvant organique qui dissout la résine de copolymère, et à ajouter un agent de choration et/ou un agent de chlorosulfonation à la solution résultante pour produire un copolymère éthylène/acétate de vinyle chloré ou chlorosulfoné dans lequel le degré total de substitution des atomes de carbone de squelette du copolymère éthylène/acétate de vinyle chloré ou chlorosulfoné est d'environ 30 à 50% et qui, facultativement, contient jusqu'à environ 5 groupes chlorure de sulfonyle pour 100 atomes de carbone de squelette du copolymère.

7. Un procédé de la revendication 6, dans lequel la résine de copolymère éthylène/acétate de vinyle a une teneur en acétate de vinyle d'environ 16 à 26 pour cent en poids.

8. Un procédé de la revendication 6 ou 7, dans lequel l'indice de fluidité à l'état fondu de la résine de copolymère éthylène/acétate de vinyle est d'environ 400 à 3000.

9. Une composition de peinture pulvérisable à forte teneur en matières solides et à basse viscosité, comprenant 15 à 30 pour cent en poids, par rapport au poids de la composition totale, d'un copolymère éthylène/acétate de vinyle chloré ou chlorosulfoné selon la revendication 1, dans laquelle ledit copolymère contient environ 42 à 56 pour cent en poids de chlore combiné, environ 2 à 6 groupes acétate pour 100 atomes de carbone de squelette dudit copolymère éthylène/acétate de vinyle chloré ou chlorosulfoné, et jusqu'à 5 groupes chlorure de sulfonyle pour 100 atomes de carbone de squelette dudit éthylène/acétate de vinyle chloré ou chlorosulfoné, de sorte que le degré total de substitution des atomes de carbone de squelette du copolymère éthylène/acétate de vinyle chloré ou chlorosulfoné soit d'environ 30 à 50%, un solvant organique qui dissous le copolymère éthylène/acétate de vinyle chloré ou chlorosulfoné, et environ 20 à 35 pour cent en poids de charges et pigments, par rapport au poids total de la composition, la composition de peinture pulvérisable ayant une viscosité de solution d'environ 300 à 5000 cPo, mesurée par un viscosimètre Brookfield.

10. Une composition de la revendication 9, contenant environ 12 à 26 pour cent en poids d'un copolymère éthylène/acétate de vinyle chloré ou chlorosulfoné.

11. Une composition de la revendication 9, dans laquelle le copolymère éthylène/acétate de vinyle chlorosulfoné contient environ 0,1 à 1 groupe chlorure de sulfonyle pour 100 atomes de carbone de squelette dudit copolymère.

12. Une composition de la revendication 9, dans laquelle la viscosité de solution de la composition pulvérisable est d'environ 400 à 1000 cPo.

13. Une composition de la revendication 9, dans laquelle le solvant organique est présent en une quantité d'environ 30 à 60 pour cent en poids par rapport au poids total du copolymère éthylène/acétate de vinyle chloré ou chlorosulfoné, du solvant, des charges et des pigments.

14. Une composition de la revendication 9, ayant une teneur totale en matières solides d'environ 35 à 65 pour cent en poids.